# EUROPEAN PATENT APPLICATION

(11) **EP 3 636 672 A1**
(43) Date of publication of application: **15.04.2020**
(21) Application number: 18199312.2
(22) Date of filing: 09.10.2018
(51) Int. Cl.: C08B 9/00, D01F 1/00

(54) **MARKING OF A REGENERATED CELLULOSIC MATERIAL**

(71) Applicant: LENZING AKTIENGESELLSCHAFT, 4860 Lenzing (AT)
(72) Inventor: Suchomel, Friedrich, 4861 Schörfling am Attersee (AT)

(57) **Abstract**

This invention relates to the marking of regenerated cellulosic materials with detectable nucleic acid marker mixtures.

## Description

This invention relates to the marking of regenerated cellulosic materials with detectable nucleic acid marker mixtures.

Product counterfeiting is a still growing problem within the industry, also within the textile industry. Not only consumer end products are subject to counterfeiting, but also basic materials like textile fibers. Thus there is a need for enabling the identification of the origin of such materials. This applies in particular for relatively new materials like lyocell which attracts growing attention due to its favourable inherent properties like sustainability, biodegradability etc..

### Prior Art

A generally well-known and proven method of marking materials is the use of a tracer material which can be identified. A widely known example is the incorporation of UV-emitting fibrids into the paper for bank notes.

Another marking method, applicable in the area of cellulosic materials, is the application of nucleic acid markers (DNA) having a specific length and a specific sequence. The DNA used in this method may be single or double stranded DNA. The detectable marker DNA may be from about 20 bases to about 5,000 kilobases in single strand length, or about 20 base pairs to about 5.000 base pairs in double strand length. Such DNA can e.g. be sprayed onto cotton, e.g. directly after harvesting during ginning or after opening the cotton bales but before carding, in particular to identify organic cotton or certain cotton qualities like pima cotton. It also can be incorporated into the spinning solution in the viscose process. Both methods are described in US 2005/0112610 A1.

Viscose fibre is produced by extruding a solution of a cellulose derivative through very small spinneret holes and then coagulating by changing the pH and by converting the derivative back to cellulose.

Cellulose as wood pulp is usually used as the starting material although other sources of cellulose such as bamboo and cotton linters are also used. The wood pulp is steeped in sodium hydroxide and then reacted with carbon disulphide to convert it to cellulose xanthate. The xanthate is dissolved in a sodium hydroxide solution to yield a viscous, golden coloured liquid which is commonly called viscose.

The viscose is de-aerated and filtered. It is then extruded through precious metal spinnerets into a spinbath consisting of sulphuric acid, sodium sulphate and zinc sulphate. The acid reacts with the sodium hydroxide in the viscose to cause coagulation of the cellulose xanthate. The acid also reacts with the cellulose xanthate converting it back to cellulose.

While the newly formed fibre is still in a plastic state it is stretched to increase the orientation of the cellulose molecules with the axis of the fibre and encourage crystallisation. The fibre may then be cut into lengths to form staple fibre or it may be kept as continuous filament or tow depending on the design of the spinning machine and the product required.

In the remainder of the process the fibre is washed to remove non-cellulose products of the reaction such as sodium sulphate and hydrogen sulphide, finished with lubricants and anti-stats to aid downstream processing and dried. Modern viscose plants are designed to recover as much of the by-products of the process as possible. This is essential to avoid environmental pollution and to ensure the safety of the workforce and surrounding community. Better recovery and recycling of by-products can also give a positive economic benefit.

Modal fibre is a high wet modulus fibre produced using a modified version of the viscose process. An additive is mixed with the spinning solution which slows down the regeneration of the cellulose during spinning. Together with modified spinbath and viscose composition, the additive allows the fibre to be stretched to a much greater extent than normal viscose. This gives a fibre with a higher orientation which is stronger than viscose and has a modulus closer to that of cotton. Modal fibre is often used in blend with cotton to give softer fabrics than would be made with cotton alone. It is used widely in knitted fabrics for lingerie and ladies apparel.

Lyocell is produced by a solvent spinning process. The solvent is a mixture of an amine oxide, which is non-toxic, in water. A slurry of cellulose in a mixture of amine oxide and water is prepared. Water is removed from the slurry by evaporation and as the water content decreases, the cellulose dissolves in the amine oxide producing a solution which is a viscous liquid above 80°C. The solution is extruded through spinneret holes via an air gap into an aqueous coagulation bath. The solvent is diluted by the water and the cellulose coagulates to form a fibre. In the remainder of the process, the fibre is washed to remove any amine oxide solvent, cut into staple fibre, finished with a lubricant and an antistatic agent and then dried.

In another version of the process, the tow of newly formed fibre is cut into staple fibre of the required length and then washed on a moving wash bed. The washed fibre is dried in a flatbed dryer.

In another version of the process, lyocell is produced as a continuous filament yarn by winding a bundle of filaments onto a package for subsequent use.

In yet another version of the process, lyocell is produced directly as a nonwoven fleece by using a solution-blowing extrusion spinneret and subsequent coagulation, washing and winding. Such a process is disclosed among others in EP 1093536 B1

In yet another version of the process, lyocell is produced as a continuous film by using a slit-like extrusion spinneret and subsequent coagulation, washing and winding.

The amine oxide solvent used in the lyocell process is recycled in a closed loop in the factory. Recovery rates of greater than 99.5% are achieved. Recycling of the solvent means that the effect of the process on the environment is very low. It is also essential for the economics of the process.

The incorporation of a DNA marker into the spinning solution in the lyocell process is proposed in WO 2017/180302 A1. However we found that this method has some disadvantages due to the combination of high temperatures and chemical conditions (e.g. high pH value) occurring during dissolution, transport of the solution through pipes, pumps, filters etc. and spinning. Such temperatures and conditions result in a degradation of the nucleic acids which makes a later identification difficult. Furthermore part of the DNA or its degradation products will be washed out during coagulation and washing of the spun fibers. In fact we often found no detectable amounts of DNA in the treated lyocell fibers. The same applies to any other kind of molded bodies made according to the lyocell process, e.g. films, fibrids, powders etc..

Furthermore the incorporation of the DNA marker into a molded body as disclosed in WO 2017/180302 A1 bears a problem in the afterward analysis of the DNA which is typically done in a PCR device. According to e.g. example 2 of WO 2017/180302 A1 it is necessary to extract the fibers at high temperatures using highly concentrated NaOH or NMMO in order to regain the DNA marker out of the fibers. Such extraction will at least reduce the amount of DNA marker quantity which can finally be detected and in a quite probable worst case no DNA can be found any more. Obviously this results in a low reliability of the whole marking method.

Spraying the DNA onto the fibers after opening the fiber bales before carding does not solve the counterfeiting problems as it will happen outside of the sphere of influence of the fiber producer. Furthermore according to US 2005/0112610 A1 for a durable marking the DNA is usually sprayed onto the cotton fibers using a media with adhesive or crosslinking properties. Such additional components are usually not welcome among the users of lyocell fibers.

### Problem

In view of this prior art the problem to be solved was to find a method for the marking of lyocell molded bodies which omits the disadvantages outlined above.

### Description

It is an object of the present invention to provide a method for the authentication of a cellulosic molded body which is manufactured according to a regenerative process, containing the following steps:
a. Preparation of a solution of a cellulosic compound in a solvent
b. Extrusion and molding of the solution into a coagulation bath
c. Washing of the coagulated strands of cellulose
d. (optionally: cutting)
e. Pre-drying
f. Final drying
g. Packaging
wherein between pre-drying and final drying an aqueous preparation of a detectable unique nucleic acid marker ("DNA") is applied to the humid cellulosic molded body.

A regenerative process in the sense of the present invention means that the cellulosic compound - i.e. cellulose in the case of a lyocell process, cellulose xanthogenate in the case of a viscose or modal process - is first dissolved in a suitable solvent and thereafter coagulated in a coagulation bath, whereby also the pure cellulose is regained. All cellulosic molded bodies which are produced by such regenerative process show a microstructure (so-called "Cellulose-II") which is fundamentally different from the microstructure (so-called "Cellulose-I") of native celluloses such as cotton, wood pulp etc.. Such regenerated cellulosic molded bodies therefore can easily be distinguished from native celluloses, e.g. by x-ray scattering methods.

The regenerative process for manufacturing the cellulosic molded body according to a lyocell solvent spinning process up to the washing step is in principle well known to the skilled in the art from numerous publications. The design of the extrusion and molding step depends on the kind of molded body which shall be produced, e.g. a staple fiber, an endless filament, a film or a solution-blown nonwoven web of endless filaments, and is in principle also well known to the skilled in the art from numerous publications. The regenerative process for manufacturing the cellulosic molded body according to a viscose or modal spinning process up to the washing step is in principle also well known to the skilled in the art from numerous publications.

The position of the optional cutting step in the sequence of the whole process also depends on the kind of molded body which shall be produced: In the manufacture of a staple fiber the endless filament tow may be cut directly after the coagulation step, somewhere in between the washing stage or after the drying step. In the manufacture of an endless filament, a film or a solution-blown nonwoven web of endless filaments no cutting is needed, because these molded bodies are usually wound up in endless form.

Depending on the requirements to the final product additional treatment steps such as application of spin finish, bleaching, etc. may be applied between washing and packaging.

Depending on the type of the final product its packaging is done in a conventional way, i.e. baling for staple fibers, winding for endless filament, film and solution-blown nonwoven webs of endless filaments.

According to the invention an aqueous preparation of a detectable unique nucleic acid marker ("DNA") is applied to the humid molded body in the drying stage between a first drying step (hereinafter "pre-drying step") and a second drying step (hereinafter "final drying step").

In a preferred embodiment of the invention the aqueous DNA preparation is applied by spraying it onto the humid molded body. It is important to achieve even distribution of the marker on the fibers and therefore as many fibers as possible should be exposed directly to the liquid DNA preparation spray.

If the fibers are in cut form, i.e. staple fibers, then the pre-drying step in the meaning of the present invention consists at least of one mechanical squeezing device at the beginning of the drying stage. In particular it is important that after applying the DNA preparation to the humid molded body no further exchange of liquid between the humid molded body and any other liquid cycles can take place. This is mainly to prevent loss of the valuable DNA but also to ensure that the DNA will not be anywhere else than on the fibers as intended. After passing one mechanical squeezing device at the beginning of the drying stage, the humid molded bodies will have a water content of about 80 to 120% (w/w).

Preferably the pre-drying step according to the invention contains at least one mechanical squeezing device and at least one actively heated drying device. However the pre-drying step may contain more than one mechanical squeezing devices and/or more than one actively heated drying devices.

In particular the heated drying device may contain one or more dryers, e.g. one, two, three, four, five or six dryers, each of them forming one drying zone. Preferably each dryer can be either a drum dryer or a flatbed dryer, e.g. a belt dryer. Usually from one drying zone to the subsequent one the temperature is decreasing, e.g. a first zone with a temperature of between 95 and 140°C, a second zone with between 60 and 80°C and a third zone with between 30 and 50°C.

In commercial fiber plants very often a fiber opener - also called intermediate opener - is arranged between two adjacent dryers. For example in a heated drying device containing five dryers a fiber opener may be located between the second and third dryer.

In a preferred embodiment the DNA is applied directly after a fiber opener. In the opened state of the fibers at this point the DNA preparation can be more evenly distributed over the fibers than by applying the DNA preparation to a fiber fleece compacted e.g. by a mechanical squeezing device. In another preferred embodiment the DNA is applied after a dryer, e.g. a drum dryer, directly before a fiber opener.

In another preferred embodiment of the invention the actively heated drying device is realized as one belt dryer or flatbed dryer for cutted staple fibers with several zones with different temperatures, e.g. a first zone with a temperature of between 95 and 140°C, a second zone with between 60 and 80°C and a third zone with between 30 and 50°C. In this embodiment the DNA preparation may be preferably applied after the second and before the third zone. In dryers with other numbers of zones the invention works accordingly. Preferably the location for spraying the DNA preparation onto the fibers is before an intermediate fiber opener located between two drying zones.

For the present invention it is preferred that after application of the DNA preparation the cellulosic molded body can further dry, i.e. that surplus humidity can be removed. Therefore the final drying step may either be a further drying zone with active heating or a step where the material further dries due to its inherent heat from the pre-drying step.

In a preferred embodiment of the invention the DNA preparation is applied to the humid cellulosic molded body at a point where it has a humidity, i.e. water content, after the pre-drying step of 1- 40 % (w/w), even more preferred of 7 - 15 % (w/w). Surprisingly it was found that within this range of cellulose humidity the DNA will be bound durably to the cellulosic body.

If the cellulosic molded bodies are in endless form, i.e. as a so-called tow, it is preferred to spread the single filaments into a flat form and to guide them side by side over a godet, wetted with the liquid DNA preparation in order to avoid too much humidity on the filaments. Also spraying an adequate quantity of the DNA preparation onto the filaments is possible, if it is done in a manner providing for even distribution of the DNA preparation on the filaments. However other ways to apply a liquid preparation to a humid molded body may also be suitable.

For commercial purposes in order to avoid later changes of its total weight due to loss or absorption of water, the cellulosic molded body in general should be dried to a humidity content of 8 - 12 % (w/w) (the so-called equilibrium moisture content of cellulose). According to preferred embodiments of the invention this value could either be reached directly after the final drying step or by drying to an even lower humidity content ("over-drying") and subsequent conditioning, e.g. by applying steam. In principle even simple conditioning in air would be possible, but usually this is not commercially feasible due to the longer time needed.

Preferably the regenerative process is a process selected from the group consisting of the viscose process, modal process and lyocell process. Accordingly the molded body is viscose, modal or lyocell respectively; the invention works as well with other man-made cellulosic fibers like polynosic, cupro and the like. Such processes are in principle also well known to the skilled in art. They are regenerative processes in the sense of the present invention, as well.

Especially preferred the regenerative process is a lyocell process, the cellulosic compound is cellulose, the solvent is aqueous amine oxide and the extrusion and molding of the solution into a coagulation bath involves an air gap.

In another especially preferred embodiment the regenerative process is a viscose or modal process, the cellulosic compound is cellulose xanthogenate and the solvent is aqueous sodium hydroxide solution.

Yet another embodiment of the invention which is in general applicable to endless molded lyocell bodies - endless filament, film, solution-blown nonwoven - may consist of a contact dryer, for example a heated godet, or of other suitable drying means like hot air blowing, microwave dryer or radiation heat. Such dryers also have to be equipped with a device that allows the application of the DNA preparation directly after the drying zone.

Detectable unique nucleic acid markers ("DNA") are commercially available, for example from Applied DNA Sciences, Inc., Stony Brooks, New York, U.S.A., usually as a powder. This powder is used as a starting material for the purposes of this invention. To enable reliable detection of the DNA on the cellulosic molded body, the procedure given by the marking system provider should be followed

The aqueous DNA preparation can for example be prepared according to the descriptions in US 2005/0112610 A1 and WO 2017/180302 A1, whose respective content is hereby incorporated by reference.

In a preferred embodiment of the invention the aqueous DNA preparation is applied in a ratio of about 2 - 6 % (w/w) in relation to the cellulose, i.e. to the bone dry cellulose. To avoid any misunderstanding, this ratio itself gives no specific definition for the concentration of the DNA on the cellulose, but should provide for a good processability of the molded body. A higher ratio would mean more water on the fiber which would require longer drying time; a smaller ratio would make it difficult to reach an even distribution of the DNA on the molded bodies.

The DNA may be activated in the preparation before applying the preparation to the cellulose molded body. This activation can in particular be done by
a) applying a temperature of more than 100°C to the aqueous DNA preparation,
b) adding alkali to the DNA preparation by an alkaline solution - preferably a solution of a hydroxide of an alkali metal - of a pH of 9.0 or higher, or
c) adding an activator to the DNA preparation; suitable activators can be found e.g. in US 2005/0112610 A1 and WO 2017/180302 A1.

The activation methods according to b) and c) above may require an activation time of about 15 to 60 minutes, for example 30 minutes, between adding the alkali resp. the activator and applying the DNA preparation to the cellulosic molded body.

In a another embodiment the present invention provides an authenticated regenerated cellulosic molded body manufactured according to a regenerative process which is authenticated by a detectable unique nucleic acid marker ("DNA"), wherein the DNA is located only in the outer layer of the molded body. This cellulosic molded body can be manufactured as described above. The method and devices to detect the DNA marker on the fibers usually will be provided by the marking system provider. Such a method is e.g. outlined in WO 2017/180302 A1. For example the fibers will be put into a vial containing the appropriate primer delivered by the marking system provider. After proper shaking according to the instructions of the marking system provider the primer solution can be analysed in a PCR device according to the instructions by the provider of the marking system.

Surprisingly the authenticated regenerated cellulosic molded bodies could be identified without the need to extract them at high temperatures using highly concentrated NaOH or NMMO like e.g. in example 2 of WO 2017/180302 A1 in order to regain the DNA marker out of the fibers. Such extraction will at least reduce the amount of DNA marker quantity which can finally be detected and in a quite probable worst case no DNA can be found any more.

This surprising advantage makes the product and method of the invention much easier to operate and with more reliable results than the methods of the state of the art, as e.g. disclosed in WO 2017/180302 A1.

Furthermore this finding also enables differentiation of molded bodies which are authenticated according to the present invention from molded bodies which are authenticated by incorporation of DNA according to the state of the art: While it is sufficient to regain the DNA from the molded bodies authenticated according to the present invention by shaking the fibers in the primer solution, the same treatment of molded bodies which are authenticated by incorporation of DNA will result in insufficient regain of the DNA. This results in a very high number of PCR cycles needed to reproduce a sufficient quantity of DNA to be identified. According to general knowledge reliable identification of a specific DNA is not possible any more if more than 30 PCR cycles are needed to reproduce a sufficient quantity of DNA. To identify the molded bodies which are authenticated according to the present invention less than 30 PCR cycles are necessary. In other words: If by simply shaking fibers in a vial with primer solution enough DNA is regained to identify it by less than 30 PCR cycles then the fibers are authenticated by the method of the present invention. Of course this method of differentiation requires that always the appropriate primer is used.

In a preferred embodiment of the invention the regenerated cellulosic molded body is in the form of a staple fiber, a filament, a web of endless filaments, a film or a powder particle.

In a preferred embodiment of the invention the regenerative process for the manufacture of the regenerated cellulosic is a process selected from the group consisting of the viscose process, modal process and lyocell process. Accordingly the molded body is viscose, modal or lyocell respectively. However the present invention may work with other regenerated cellulosic molded bodies, like polynosic, cupro, etc., in the same or at least a similar way and with the same or at least a similar performance.

In a further preferred embodiment of the invention the regenerative process for the manufacture of the regenerated cellulosic is a lyocell process. Accordingly the molded body is lyocell.

The invention will now be illustrated by examples. These examples are not limiting the scope of the invention in any way. The invention includes also any other embodiments which are based on the same inventive concept

### Examples

A DNA concentrate comprising detectable marker DNA as well as a compatible activator and a compatible dilution solution were provided by Applied DNA Sciences, Inc., Stony Brooks, New York, U.S.A.. To obtain the aqueous DNA preparation the DNA concentrate was activated, diluted and allowed to re-equilibrate according to the procedure given by the DNA supplier.

### Example 1:

Commercially available lyocell staple fibers with a length of 38 mm and a titer of 1.3 dtex were provided by Lenzing Aktiengesellschaft, Lenzing, Austria.

100 g of the lyocell staple fibers were heated to 70°C in a laboratory heating oven to simulate the pre-drying step of a commercial fiber plant. After the pre-drying step the lyocell fibers had a humidity content of about 10 % (w/w). The aqueous DNA preparation, prepared according to the procedure given by the DNA supplier, with a total volume of 4 ml was then sprayed onto the fibers using a spray bottle. Then the impregnated fibers were allowed to re-condition at standard room conditions (25°C, 60% relative air humidity) to a humidity content of 11 % (w/w).

The marked lyocell fibers thus obtained were spun into a yarn and knitted. The knitted fabric was bleached and dyed using standard laboratory procedures as follows:
First the marked fibers were washed using 1 g/l Kieralon JET, 1 g/l sodium carbonate, 1 g/l Albaflow FFA, 1 g/l Persoftal L for 20 minutes at 80°C; then they were rinsed first at 50°C and afterwards at 20°C.

Then the fibers were bleached using 2,8 ml/I hydrogen peroxide 50%, 0,7 ml/I caustic soda 50%, 1,0 g/l Kieralon JET, 0,8 g/l Kappafos D11, 1,0 g/l Prestogen D2000. The bleaching was started at a temperature of 40°C; at a rate of 1,5°/min the lye was heated up to 90°C and kept at this temperature for 60 minutes. Afterwards the fibers were rinsed first at 50°C and afterwards at 20°C.

The fibers were then dyed green with Remazol dyes at a liquor ratio of 1:50 using 2,0 % Remazol brilliant yellow 4GL, 2,0% Remazol brilliant green 6B, 50 g/l Glauber's salt, 5 g/l Soda, 1 ml/l NaOH 38° Be' and 2 g/l Persoftal L due to a usual procedure. Afterwards the fibers were rinsed cold, i.e. at 20°C; rinsed with 1ml/l acidic acid for 10 minutes at 40°C; rinsed warm, i.e. at 50°C, washed with soap 1g/l JET (20 minutes / 90°C); rinsed first at 50°C and afterwards at 20°C.

Surprisingly it was found that it was possible to identify the DNA on the final fabric by the method and devices provided by the marking system provider, e.g. according to WO 2017/180302 A1. In particular the fibers were put into a vial containing the primer delivered by the marking system provider. After proper shaking according to the instructions of the provider of the marking system the primer solution was analysed in a PCR device according to the instructions by the marking system provider.

### Example 2:

100 g of the same lyocell staple fibers as in Example 1 were taken at room temperature and had a humidity content of about 12 % (w/w). The aqueous DNA preparation, prepared according to the procedure given by the marking system provider, with a total volume of 4 ml was then sprayed onto the fibers using a spray bottle. Then the impregnated fibers were allowed to re-condition at standard room conditions (25°C, 60% relative air humidity) to a humidity content of 11 % (w/w).

The marked lyocell fibers thus obtained were processed into a bleached and dyed knitted fabric in the same way as in Example 1. It was found that it was possible to identify the DNA on the final fabric by the same method and devices as in Example 1.

### Example 3:

In a continuously working pilot plant for the manufacture of lyocell staple fibers according to the wet-cut method the drying stage was equipped with five dryer drums. A spraying device was located between the second and the third dryer drum, directly before the intermediate opener after the second dryer drum. 25 I of aqueous DNA preparation, prepared according to the procedure given by the marking system provider, were sprayed using the spraying device onto 655 kg of fiber in 10 h, i.e. at a rate of 42 ml/min.
Marked lyocell fibers thus obtained were processed into a bleached and dyed knitted fabric in the same way as in Example 1. It was found that it was possible to identify the DNA on the final fabric by the same method and devices as in Example 1.

### Example 4:

In the same pilot plant as in Example 3 25 I of aqueous DNA preparation, prepared according to the procedure given by the marking system provider, was sprayed by the spraying device onto 655 kg of fiber in 10 h, i.e. at a rate of 42 ml/min after the latest drying zone, i.e. after the fifth drying drum. The fibers left the fifth dryer drum at 7% humidity, i.e. they were overdried. Spraying the DNA preparation added 4% humidity to the fibers, which resulted in a final fiber humidity of 11%. After the fifth drum dryer the fibers were blown through a blowing tube towards the baling press. In that blowing tube the DNA on the fibers was further homogenized.

The marked lyocell fibers thus obtained were processed into a bleached and dyed knitted fabric in the same way as in Example 1. It was found that it was possible to identify the DNA on the final fabric by the same method and devices as in Example 1.

In all examples it was not necessary to extract the fibers at high temperatures using highly concentrated NaOH or NMMO like in example 2 of WO 2017/180302 A1.

## Claims

1. Method for the authentication of a cellulosic molded body which is manufactured according to a regenerative process, containing the following steps:
a. Preparation of a solution of a cellulosic compound in a solvent
b. Extrusion and molding of the solution into a coagulation bath
c. Washing
d. (optionally: cutting)
e. Pre-drying
f. Final drying
g. Packaging
**characterized in that** between pre-drying and final drying an aqueous preparation of a detectable unique nucleic acid marker ("DNA") is applied to the humid molded body.

2. Method according to claim 1, wherein the aqueous preparation of the detectable unique nucleic acid is applied in a ratio of about 2 - 6 % (w/w) in relation to the cellulose.

3. Method according to claim 1, wherein after the pre-drying step the humid cellulosic body has a humidity content of 1 - 40 % (w/w), preferably 7 - 15 % (w/w).

4. Method according to claim 1, wherein after the final drying step the cellulosic body has a humidity content of 8 - 12 % (w/w).

5. Method according to claim 1, wherein the pre-drying step consists of at least a mechanical squeezing device.

6. Method according to claim 1, wherein the pre-drying step consists of at least a mechanical squeezing device and a heated drying device.

7. Method according to claim 6, wherein the heated drying device contains one or more dryers.

8. Method according to claim 7, wherein each dryer is either a drum dryer or a flatbed dryer.

9. Method according to any of the preceding claims, wherein after the application of the DNA the fibers are opened by a fiber opener.

10. Method according to claim 1, wherein the regenerative process is a process selected from the group consisting of the viscose process, modal process and lyocell process.

11. Method according to claim 1, wherein the regenerative process is a lyocell process, the cellulosic compound is cellulose, the solvent is aqueous amine oxide and the extrusion and molding of the solution into a coagulation bath involves an air gap.

12. Method according to claim 1, wherein the regenerative process is a viscose or modal process, the cellulosic compound is cellulose xanthogenate and the solvent is aqueous sodium hydroxide solution.

13. Authenticated regenerated molded body manufactured according to a regenerative process which is authenticated by a detectable unique nucleic acid marker ("DNA"), **characterized in that** the DNA is located only in the outer layer of the molded body.

14. Regenerated cellulosic molded body according to claim 13, which is in the form of a staple fiber, a filament, a web of endless filaments, a film or a powder particle.

15. Regenerated cellulosic molded body according to claim 13, wherein the regenerative process is a process selected from the group consisting of the viscose process, modal process and lyocell process.

16. Regenerated cellulosic molded body according to claim 13, wherein the regenerative process is a lyocell process.
